# EUROPÄISCHE PATENTSCHRIFT

(11) **EP 1 167 163 B1**
(45) Veröffentlichungstag und Bekanntmachung des Hinweises auf die Patenterteilung: **08.02.2006**
(21) Anmeldenummer: 01105404.6
(22) Anmeldetag: 12.03.2001
(51) Int. Cl.: B62D 15/02

(54) **Vorrichtung und Computerprogramm zur Bestimmung des Lenkwinkels einer Fahrzeuglenkung**
Apparatus and computer programme for the determination of the steering angle of a vehicle steering system
Dispositif et programme d'ordinateur pour la détermination de l'angle de braquage de direction d'un véhicule

(30) Priorität: 29.06.2000 DE 10031732
(43) Veröffentlichungstag der Anmeldung: 02.01.2002
(73) Patentinhaber: Valeo Schalter und Sensoren GmbH, 74321 Bietigheim-Bissingen (DE)
(72) Erfinder: Klein, Rudolf, 74348 Lauffen a. N. (DE); Engelhardt, Martin, 74246 Eberstadt (DE)
(74) Vertreter: Dreiss, Fuhlendorf, Steimle & Becker

(56) Entgegenhaltungen:
- EP-A- 0 913 319
- DE-A- 19 515 423
- DE-A- 19 837 076
- DE-A- 19 936 211
- DE-C- 19 805 106

## Beschreibung

Die vorliegende Erfindung betrifft eine Vorrichtung zur Bestimmung des Lenkwinkels einer Fahrzeuglenkung nach dem Oberbegriff des Anspruchs 1.

Eine solche Vorrichtung wird bei heute üblichen Kraftfahrzeugen eingesetzt. Dabei wird die Position der Lenkwelle innerhalb einer 360°-Umdrehung durch einen innerhalb dieser Umdrehung eindeutigen Code festgelegt, welcher auf einem mit der Lenkwelle verbundenen Codeelement vorliegt und von einem stationären Sensor erfasst und in einer nachgeordneten Auswerteeinheit ausgewertet wird. Da eine Lenkwellen-Umdrehung von 360° für heute gebräuchliche Kraftfahrzeuge jedoch zumeist nicht ausreicht, muss auch bestimmt werden, innerhalb welcher 360°-Umdrehung sich die Lenkwelle gerade befindet. Dies erfolgt im Allgemeinen durch einen mit der Lenkwelle fest verbundenen Mitnehmer, der bei jeder vollen 360°-Umdrehung in ein Mitnehmerrad eingreift und dieses um einen bestimmten Betrag weiterbewegt. Diese Bewegung wird ebenfalls erfasst und hierdurch der Lenkwelle eine bestimmte Umdrehung zugeordnet.

Bei dieser mechanischen Sensierung der Umdrehung tritt jedoch bei jedem Auftreffen des Mitnehmers auf dem Mitnehmerrad und bei jedem Umschalten des Mitnehmerrades ein hörbares "Klacken" auf. Gerade bei hochwertigen Fahrzeugen mit auch im Fahrbetrieb sehr geringem Innengeräusch wird ein solches "Klacken" vom Benutzer als störend empfunden. Darüber hinaus muss die aus Mitnehmer und Mitnehmerrad bestehende Einheit mit relativ hoher.Genauigkeit hergestellt werden, damit der Mitnehmer sicher in das Mitnehmerrad eingreift und sich von diesem wieder löst. Eine solche hohe Genauigkeit bei der Herstellung erhöht jedoch den Preis dieser Vorrichtung.

Bei der DE 199 36 211 A1 wird daher vorgeschlagen, einen Rotor mit einem Stator über ein Getriebe ständig zu koppeln. Auch die DE 198 37 076 A1 zeigt eine ständige Kopplung eine Rotors mit einem Stator über ein Wickelband.

Die vorliegende Erfindung hat daher die Aufgabe, eine Vorrichtung zur Bestimmung des Lenkwinkels der eingangs genannten Art so weiter zu bilden, dass sie möglichst einfach baut und preiswert hergestellt werden kann.

Diese Aufgabe wird durch eine Vorrichtung mit den Merkmalen des Anspruchs 1 gelöst.

Erfindungsgemäß wurde festgestellt, dass eine Erfassung aller möglichen Winkelpositionen des Hilfselements nicht erforderlich ist, sondern dass es ausreicht, einen Winkelbereich festzuhalten, in dem sich das Hilfselement gerade befindet. Auf diese Weise kann der Erfassungsaufwand bezüglich der Position des Hilfselementes reduziert werden. Durch die Ausgestaltung des Signalgebers kann die Anzahl der erfassbaren Positionen des Hilfselements verdoppelt werden. Darüber hinaus werden hierdurch die Anforderungen an die Positioniergenauigkeit des Hilfselements gesenkt, was sich in den Herstellungskosten günstig auswirkt.

Vorteilhafte Weiterbildungen der Erfindung sind in Unteransprüchen angegeben.

Bei einer Weiterbildung der Erfindung bestimmt die Auswerteeinrichtung die Umdrehung, in der sich die Lenkwelle gerade befindet, aus einem Wertepaar, welches die Winkelposition der Lenkwelle und die Position des Hilfselements umfasst. Diese Ausbildung ist softwaremäßig besonders leicht zu realisieren.

Dabei ist besonders vorteilhaft, wenn die Verbindungseinrichtung die Bewegung der Lenkwelle so an das Hilfselement überträgt, dass jedes aus der Winkelposition der Lenkwelle und der Position des Hilfselements bestehende Wertepaar über die maximal mögliche Anzahl der Umdrehungen nur einmal vorkommt. Auf diese Weise wird eine Eindeutigkeit der Wertepaare geschaffen, so dass die Bestimmung des Lenkwinkels präzise und einfach möglich ist.

Besonders platzsparend ist die Weiterbildung, bei der das Hilfselement koaxial zur Lenkwelle angeordnet ist.

In Weiterbildung der Erfindung wird ferner vorgeschlagen, dass das Hilfselement einen radial außen um die Lenkwelle angeordneten Umlenkkäfig und die Verbindungseinrichtung ein flexibles Verbindungselement umfasst. Bei einem solchen Umlenkkäfig handelt es sich um ein ringförmiges Teil, dessen Wand an einer Stelle offen ist. Durch diese Stelle ist das flexible Verbindungselement geführt, welches einerseits mit einem fahrzeugfesten Stator und andererseits mit der Lenkwelle verbunden und auf dieser aufgewickelt ist. Wird die Lenkwelle bewegt, wird das Verbindungselement von der Lenkwelle ab- bzw. auf die Lenkwelle aufgespult und hierdurch der Umlenkkäfig bewegt. Das Untersetzungsverhältnis der Drehbewegung zwischen Lenkwelle und Umlenkkäfig hängt dabei von dem Verhältnis zwischen Durchmesser des Stators und dem Außendurchmesser der Lenkwelle ab. Es sei an dieser Stelle darauf hingewiesen, dass das flexible Verbindungselement auch an einem anderen, mit der Lenkwelle drehfest verbundenen Teil befestigt sein kann und unter dem Begriff "Lenkwelle" hier und nachfolgend auch andere mit der Lenkwelle drehfest verbundene Teile verstanden werden.

Ein solcher Umlenkkäfig eignet sich sehr gut als Hilfselement und ist dabei in der Herstellung einfach und aufgrund der relativ geringen Toleranzanforderungen preiswert herzustellen.

Bei einer Weiterbildung umfasst das Verbindungselement mindestens eine elektrische Leitung, insbesondere ein Wickelband, welche eine lenkwellenfeste Einrichtung elektrisch mit dem stationären Fahrzeugbereich verbindet. Ein derartiges Verbindungselement, insbesondere ein Wickelband, ist bei vielen Fahrzeugen in Verbindung mit einem Umlenkkäfig bereits vorhanden. Vorzugsweise werden mit einem solchen Wickelband die Signale von bzw. zu einer Hupe, einem Airbag oder Bedienungstasten am Lenkrad des Fahrzeugs geleitet.

Alternativ zu dem flexiblen Verbindungselement wird in einer Weiterbildung der Erfindung vorgeschlagen, dass die Verbindungseinrichtung ein Getriebe mit mindestens einem Getrieberad umfasst. Auch eine solche Verbindungseinrichtung arbeitet relativ geräuschlos und ermöglicht eine präzise kinematische Verbindung des Hilfselements mit der Lenkwelle. Vorteilafterweise wird das Hilfselement durch ein Getrieberad selbst gebildet.

Vorzugsweise ist dabei die Anzahl der Sensoren mindestens gleich der Anzahl der maximal möglichen Umdrehungen der Lenkwelle.

Die Geräusche beim Betrieb der erfindungsgemäßen Vorrichtung werden bei einer Weiterbildung reduziert, bei der die Erfassungseinrichtung berührungslos arbeitet.

In Weiterbildung der Erfindung ist eine bevorzugte Ausführung der Vorrichtung genannt, bei der die maximale Anzahl der Umdrehungen der Lenkwelle = 7, die Untersetzung der Drehbewegung der Lenkwelle auf das Hilfselement = 4/7 und die Anzahl der Sensoren = 7 ist und die Winkelerstreckung des Signalgebers in etwa 108° beträgt. Eine solche Vorrichtung ist für viele gebräuchliche Kraftfahrzeuge sehr gut einsetzbar.

Bei einer anderen Weiterbildung der Erfindung umfasst die Erfassungseinrichtung optische oder magnetische Sensoren, insbesondere Hall-ICs, und der Signalgeber einen farbigen Code bzw. ein Magnetsegment. Derartige Erfassungseinrichtungen sind heute preiswert erhältlich und arbeiten mit hoher Funktionssicherheit.

Schließlich ist noch eine Weiterbildung der Erfindung vorgesehen, bei der die Vorrichtung einen Speicher mit einer Zuordnungstabelle umfasst, in der jedem aus einer Lenkwellenposition und einer Hilfselementposition bestehenden Wertepaar eine entsprechende Umdrehung der Lenkwelle zugeordnet ist. Mit einer solchen Zuordnungstabelle wird der Rechenaufwand bei der Bestimmung der aktuellen Umdrehung der Lenkwelle vermindert. Darüber hinaus ist sie softwaremäßig einfach zu realisieren.

Mit einem Computerprogramm wird die Umdrehung, in der sich die Lenkwelle gerade befindet, aus einem Wertepaar bestimmt, welches die Winkelposition der Lenkwelle und die Position des Hilfselements umfasst. Dabei wird ein Computerprogramm bevorzugt, welches auf einem Speicher abgespeichert ist, insbesondere auf einem Flash-Memory.

Nachfolgend wird ein Ausführungsbeispiel der Erfindung unter Bezugnahme auf die beiliegende Zeichnung im Detail erläutert. In der Zeichnung zeigen:
- Figur 1: eine schematische Seitenansicht einer Vorrichtung zur Bestimmung des Lenkwinkels einer Fahrzeuglenkung;
- Figur 2: eine Ansicht längs der Schnittlinie II-II von Figur 1;
- Figur 3: eine Ansicht längs der Schnittlinie III-III von Figur 2; und
- Figur 4: eine Zuordnungstabelle für die Vorrichtung von Figur 1.

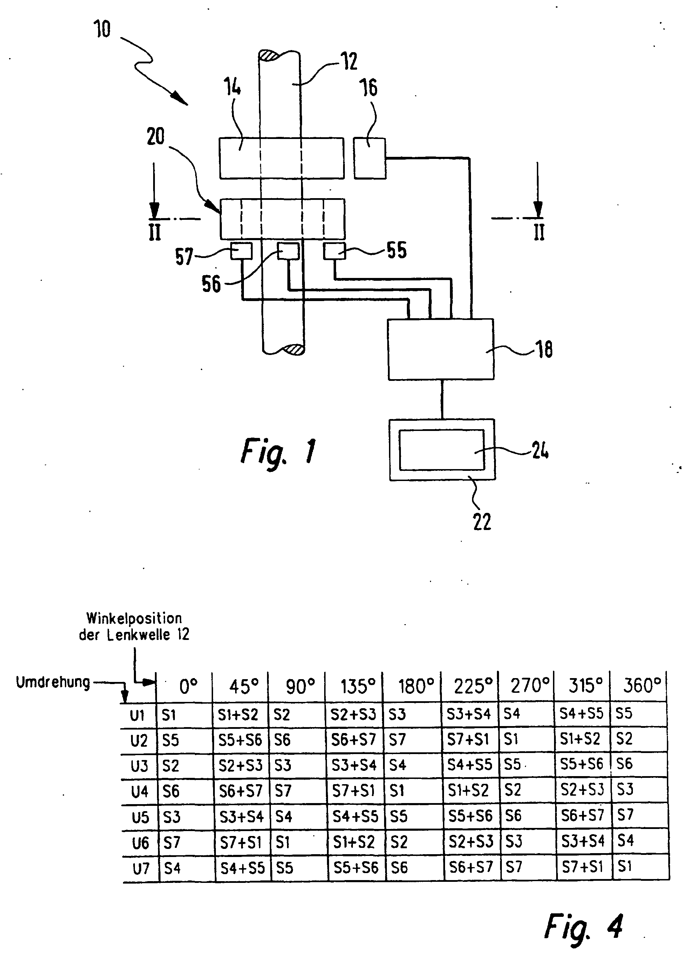

Eine Vorrichtung zur Bestimmung des Lenkwinkels einer Fahrzeuglenkung trägt in Figur 1 insgesamt das Bezugszeichen 10. Sie umfasst eine Lenkwelle 12, welche an einem Ende mit einem in Figur 1 nicht dargestellten Lenkrad und am anderen Ende mit einer Einrichtung zur Verstellung von ebenfalls nicht dargestellten Rädern eines Fahrzeugs verbunden ist.

Ferner ist eine Einrichtung zur Bestimmung der Position der Lenkwelle innerhalb einer 360°-Umdrehung vorgesehen. Diese Einrichtung ist vorliegend als Codescheibe 14 ausgebildet. Der auf der Codescheibe 14 vorhandene Code wird auf hier nicht näher interessierende Art und Weise von einem Sensor 16 ausgelesen und an eine Auswerteeinheit 18 übertragen.

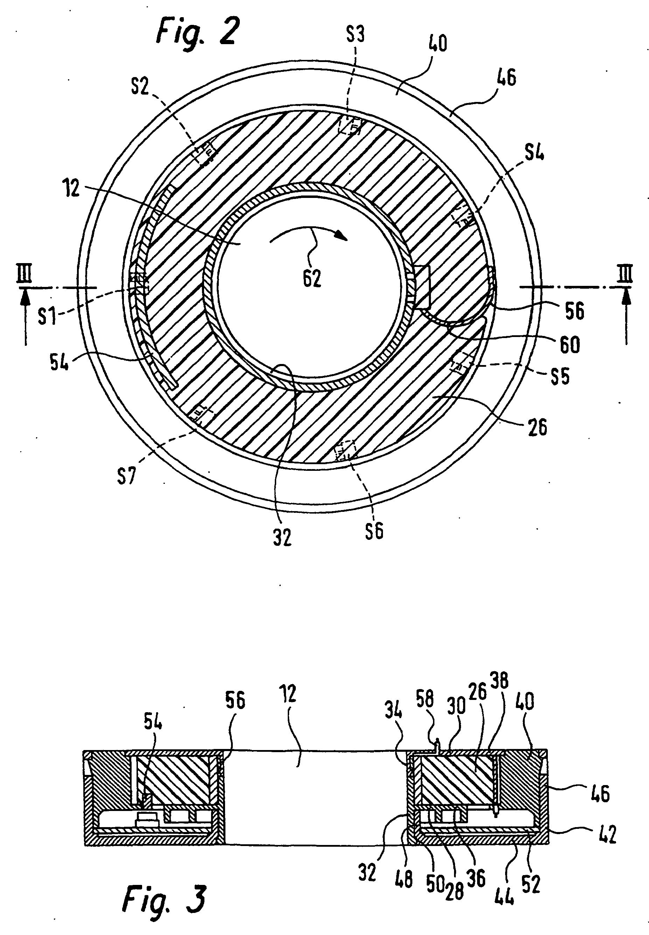

Weiterhin ist eine Einrichtung 20 vorgesehen, welche bei der Bestimmung der aktuellen Umdrehung der Lenkwelle 12 verwendet wird. Ihr Aufbau wird weiter unten unter Bezugnahme auf die Figuren 2 und 3 im Detail erläutert. Sie umfasst insgesamt sieben als S1 - S7 bezeichnete Sensoren, von denen in Figur 1 nur die Sensoren S5 - S7 dargestellt sind. Auch auf deren Funktion wird weiter unten im Detail eingegangen. Die Sensoren S1 - S7 übertragen Signale an die Auswerteeinheit 18. In Figur 1 ist in der Auswerteeinheit 18 ferner noch ein Speicher 22 symbolisch dargestellt, in dem eine Zuordnungstabelle 24 abgelegt ist.

Nun wird unter Bezugnahme auf die Figuren 2 und 3 die Einrichtung 20 im Detail erläutert, welche bei der Bestimmung der aktuellen Umdrehung der Lenkwelle 12 verwendet wird.

Die Einrichtung 20 umfasst als bewegliches Hilfselement einen koaxial um die Lenkwelle 12 angeordneten Umlenkkäfig 26. Dieser hat die Form eines Ringes, der axial zwischen einem radialen Abschnitt 36 eines lenkwellenfesten und ebenfalls ringförmigen Unterteils 28 und einem radialen Abschnitt 38 eines ebenfalls lenkwellenfesten und ringförmigen Oberteils 30 frei beweglich gelagert ist. Radial innen liegende und in axialer Richtung verlaufende Abschnitte 32 und 34 des Unterteils 28 bzw. des Oberteils 30 bilden eine Art Manschette, welche an der Lenkwelle 12 drehfest anliegt. Die sich radial erstreckenden Abschnitte 36 und 38 des Unterteils 28 bzw. des Oberteils 30 können codescheibenartig ausgebildet sein und dann die oben beschriebene Codierscheibe 14 ersetzen.
Radial außen liegend um den ringförmigen Umlenkkäfig 26 befindet sich eine fahrzeugfeste Lagerung 40, auf der das drehbare Oberteil 30 gleitend in axialer Richtung gelagert ist. Die feststehende Lagerung 40 wird auch als Stator bezeichnet. Sie ist insgesamt ebenfalls ringförmig aufgebaut. Zwischen ihrer radial innen liegenden Begrenzungswand und der radial außen liegenden Begrenzungswand des Umlenkkäfigs 26 ist ein Spalt (ohne Bezugszeichen) vorhanden.

Weiterhin ist eine ebenfalls ringförmige, feststehende Gehäusehälfte 42 vorgesehen, die eine radial verlaufende Basis 44 und eine an die Basis 44 angeformte, radial außen liegende und in axialer Richtung verlaufende Ringwand 46 sowie eine ebenfalls an die Basis 44 angeformte, radial innen liegende und ebenfalls in axialer Richtung verlaufende innere Ringwand 48 umfasst. Die äußere Ringwand 46 liegt mit ihrer radial innen liegenden Begrenzungsfläche an der radial außen liegenden Begrenzungsfläche der feststehenden Lagerung 40 an. Die radial innen liegende Ringwand 48 stützt sich am axialen Abschnitt 32 des Unterteils 28 ab, welches auf diesem gleitend gelagert und durch einen Ringbund 50 axial gehaltert ist, der in eine entsprechende Ausnehmung (ohne Bezugszeichen) in der inneren Ringwand 48 eingreift.

Oberhalb der Basis 44 der festen Gehäusehälfte verläuft zwischen der inneren Ringwand 48 und der äußeren Ringwand 46 eine ringscheibenförmige Elektronikplatine 52, auf der die für den Betrieb der Vorrichtung 10 erforderlichen Komponenten angeordnet sind. Auf der Elektronikplatine 52 sind über die Umfangserstreckung verteilt die bereits oben eingeführten Sensoren S1 - S7 befestigt, bei denen es sich um sog. "Hall ICs" handelt. Radial sind die Sensoren S1 - S7 so angeordnet, dass sie von einem Magnetsegment 54 beaufschlagt werden können, das in dem der Elektronikplatine 52 zugewandten Bereich des Umlenkkäfigs 26 in diesen eingelassen ist. Das Magnetsegment 54 hat die Form eines Ringsegments mit einer azimutalen Winkelerstreckung von ungefähr 75° (vgl. Figur 2).
In dem zwischen Umlenkkäfig 26 einerseits und den axialen Abschnitten 32 und 34 des Unterteils 28 bzw. des Oberteils 30 andererseits gebildeten Ringraum sind mehrere Wicklungen eines Wickelbandes 56 aufgewickelt. Das Wickelband 56 ist mit seinem radial innen liegenden Ende auf hier nicht näher dargestellte Weise fest mit dem Oberteil 30 verbunden. Über ein in Figur 3 nur schematisch dargestelltes Flachkabel 58 ist es mit im Lenkrad vorhandenen, hier nicht dargestellten Einrichtungen verbunden, z.B. einem Airbag, einer Hupe oder Bedienungstasten für Radio, Klimaanlage oder Telefon.

Das andere Ende des Wickelbandes 56 ist durch eine Umlenköffnung 60 (Figur 2) im Umlenkkäfig 26 nach außen geführt und mit der feststehenden Lagerung 40 fest verbunden. Die Umlenköffnung 60 bildet einen halbkreisförmig gekrümmten Spalt, dessen Krümmungsdurchmesser in etwa der Dicke der Ringwand des Umlenkkäfigs 26, also dem Abstand zwischen der radial innen liegenden und der radial außen liegenden Oberfläche der Wand des Umlenkkäfigs 26 entspricht. Die Oberfläche der Begrenzungswand der Umlenköffnung 60 ist ebenso wie die Oberflächen der radial innen liegenden Begrenzungswand sowie der radial außen liegenden Begrenzungswand des Umlenkkäfigs 26 glatt bearbeitet, um die Reibung zwischen dem Wickelband 56 und den gegenüber diesen bewegten Oberflächen zu minimieren. Ggf. können die Oberflächen auch teflonbeschichtet sein.

Die strukturellen Teile der Einrichtung 20 sind vorzugsweise aus Kunststoff hergestellt. Dabei wird eine Dicke bevorzugt, die möglicherweise auftretende Gleitgeräusche zwischen dem Wickelband 56 und den gegenüber diesem bewegten Teilen dämpft. Ggf. ist auch eine zusätzliche Kapselung aus einem schallisolierenden Material denkbar.

Die Vorrichtung 10 wird folgendermaßen betrieben:

Wird die Lenkwelle 12 vom Benutzer im Uhrzeigersinn gedreht (Pfeil 62 in Figur 2), wird diese Drehbewegung an das Wickelband 56 übertragen, welches sich mit seinem radial außen liegenden Ende durch die Umlenköffnung 60 nach außen schiebt. Da sein radial außen liegendes Ende mit der feststehenden Lagerung bzw. dem Stator 40 fest verbunden ist, wird der Umlenkkäfig 26 zu einer Relativbewegung im Uhrzeigersinn gegenüber der Lenkwelle 12 einerseits und andererseits gegenüber dem Stator 40 veranlasst. Bei einer Drehung der Lenkwelle 12 entgegen dem Uhrzeigersinn wird das Wickelband wieder auf der Lenkwelle 12 aufgewickelt, was eine Drehung des Umlenkkäfigs 26 entgegen dem Uhrzeigersinn zur Folge hat.

Das Verhältnis der Drehgeschwindigkeit des Umlenkkäfigs 26 gegenüber der Lenkwelle 12 wird dabei durch das Verhältnis der Durchmesser der radial innen liegenden Begrenzungswand der feststehenden Lagerung 40 zum Durchmesser der radial außen liegenden Begrenzungswand der Abschnitte 32 und 34 des Unterteils 28 bzw. des Oberteils 30 bestimmt. Im vorliegenden Fall ist es so gewählt, dass sieben volle Umdrehungen der Lenkwelle 12 vier volle Umdrehungen des Umlenkkäfigs 26 zur Folge haben.

Durch die Bewegung des Umlenkkäfigs 26 wird auch das mit ihm verbundene Magnetsegment 54 an den Sensoren S1 - S7 vorbeibewegt. Die Wertepaare, welche aus der Winkelposition der Lenkwelle 12 einerseits und der Winkelposition des Umlenkkäfigs 26 andererseits gebildet sind, sind dabei für jede Umdrehung der Lenkwelle 12 aus Figur 4 ersichtlich:

Dabei wird davon ausgegangen, dass zu Beginn das Magnetsegment 54 sich mittig über dem ersten Sensor S1 befindet, wie dies in Figur 2 dargestellt ist. In dieser Position befindet sich die Lenkung an ihrem einen Anschlag. Wird nun die Lenkwelle 12 um 45° verdreht, bewegt sich der Umlenkkäfig 26 mit dem Untersetzungsverhältnis von 4/7 in der gleichen Drehrichtung wie die Lenkwelle 12 so, dass die Mitte des Magnetsegments 54 sich um ca. 25,7° weiterbewegt. Aufgrund der Umfangserstreckung des Magnetsegments 54 befindet sich dieses nun im Erfassungebereich der Sensoren S1 und S2. Wird die Lenkwelle 12 um weitere 45° gedreht, bewegt sich der Umlenkkäfig 26 nochmals um knapp 25,7°, so dass er sich von seiner Ausgangsposition nun um exakt 51,4° gedreht hat. Dies entspricht genau der Winkelposition des zweiten Sensors S2, wobei aufgrund der Winkelerstreckung des Magnetsegments 54 nun ausschließlich dieser Sensor vom Magnetsegment 54 beaufschlagt wird. Am Ende der ersten vollen Umdrehung U1 der Lenkwelle 12 hat sich der Umlenkkäfig 26 um 4/7 x 360° = 205,7° weiterbewegt, so dass der Mittelpunkt des Magnetsegments 54 exakt über dem Sensor S5 zu liegen kommt. Diese Position des Umlenkkäfigs 26 bildet zugleich den Startpunkt für die zweite Umdrehung U2 der Lenkwelle 12.

Wie aus Figur 4 ersichtlich ist, taucht während der maximal möglichen sieben Umdrehungen U1 bis U7 der Lenkwelle 12 kein einziges einerseits aus der Winkelposition der Lenkwelle 12 und andererseits aus der Winkelposition des Umlenkkäfigs 26 gebildetes Wertepaar mehr als einmal auf (die Winkelposition des Umlenkkäfigs 26 wird durch die beaufschlagten Sensoren S1 - S7 dargestellt). Somit kann die Umdrehung U1 bis U7, in der sich die Lenkwelle 12 augenblicklich befindet, exakt und eindeutig festgestellt werden. Dabei ist auch nach einem Abklemmen der Stromzufuhr und dem nachfolgenden Wiederanschluss keine Eichung der Vorrichtung 10 erforderlich, da die Auswerteeinheit 18 aus dem vorliegenden Wertepaar sofort die aktuelle Umdrehung U1 bis U7 und die Winkelposition der Lenkwelle 12 bestimmen kann.

## Patentansprüche

1. Vorrichtung zur Bestimmung des Lenkwinkels einer Fahrzeuglenkung mit einer Lenkwelle (12); mit einer Einrichtung (14) zur Bestimmung der Lenkwellenposition innerhalb einer 360°-Umdrehung; mit einer Einrichtung (20), welche bei der Bestimmung der aktuellen Umdrehung der Lenkwelle (12) verwendet wird, wobei die Einrichtung (20) ein bewegliches Hilfselement (26) und eine die Position des Hilfselements feststellende Erfassungseinrichtung (20) umfasst; mit einer Auswerteeinrichtung (18); und mit einer Verbindungseinrichtung (56), über die das Hilfselement (26) kinematisch ständig mit der Lenkwelle (12) verbunden ist, **dadurch gekennzeichnet, dass** die Erfassungseinrichtung (20) umfasst: eine Mehrzahl von über den Umfang des Hilfselements (26) verteilt angeordneten Sensoren (S1 - S7), und einen mit dem Hilfselement (26) verbundenen Signalgeber (54), welcher sich über einen Winkelsektor erstreckt, der in etwa einem Wert von etwas weniger als 1,5 * 360°/Anzahl der Sensoren (S1 - S7) entspricht.

2. Vorrichtung nach Anspruch 1, **dadurch gekennzeichnet, dass** die Auswerteeinrichtung (18) die Umdrehung, in der sich die Lenkwelle (12) gerade befindet, aus einem Wertepaar bestimmt, welches die Winkelposition der Lenkwelle (12) und die Position des Hilfselements (26) umfasst.

3. Vorrichtung nach Anspruch 2, **dadurch gekennzeichnet, dass** die Verbindungseinrichtung (56) die Bewegung der Lenkwelle (12) so an das Hilfselement (26) überträgt, dass jedes aus der Winkelposition der Lenkwelle (12) und der Position des Hilfselements (26) bestehende Wertepaar über die maximal mögliche Anzahl der Umdrehungen nur einmal vorkommt.

4. Vorrichtung nach einem der vorhergehenden Ansprüche, **dadurch gekennzeichnet, dass** das Hilfselement (26) koaxial zur Lenkwelle angeordnet ist.

5. Vorrichtung nach einem der vorhergehenden Ansprüche, **dadurch gekennzeichnet, dass** das Hilfselement (26) einen radial außen um die Lenkwelle (12) angeordneten Umlenkkäfig (26) und die Verbindungseinrichtung ein flexibles Verbindungselement (56) umfasst.

6. Vorrichtung nach einem der vorhergehenden Ansprüche, **dadurch gekennzeichnet, dass** das Verbindungselement mindestens eine elektrische Leitung, insbesondere ein Wickelband (56), umfasst, welche eine lenkwellenfeste Einrichtung elektrisch mit dem stationären Fahrzeugbereich verbindet.

7. Vorrichtung nach einem der Ansprüche 1 bis 4, **dadurch gekennzeichnet, dass** die Verbindungseinrichtung ein Getriebe mit mindestens einem Getrieberad umfasst.

8. Vorrichtung nach einem der vorhergehenden Ansprüche, **dadurch gekennzeichnet, dass** die Anzahl der Sensoren (S1 - S7) mindestens gleich der Anzahl der maximal möglichen Umdrehungen der Lenkwelle (12) ist.

9. Vorrichtung nach einem der vorhergehenden Ansprüche, **dadurch gekennzeichnet, dass** die Erfassungseinrichtung (S1 - S7) berührungslos arbeitet.

10. Vorrichtung nach einem der vorhergehenden Ansprüche, **dadurch gekennzeichnet, dass** die maximale Anzahl der Umdrehungen der Lenkwelle (12) = 7, die Untersetzung der Drehbewegung der Lenkwelle (12) auf das Hilfselement (26) = 4/7 und die Anzahl der Sensoren (S1 - S7) = 7 ist und die Winkelerstreckung des Signalgebers (54) in etwa 75° beträgt.

11. Vorrichtung nach einem der Ansprüche 7 bis 10, **dadurch gekennzeichnet, dass** die Erfassungseinrichtung optische oder magnetische Sensoren, insbesondere Hall-ICs (S1 - S7), und der Signalgeber einen farblichen Code bzw. ein Magnetsegment (54) umfasst.

12. Vorrichtung nach einem der vorhergehenden Ansprüche, **dadurch gekennzeichnet, dass** sie einen Speicher (22) mit einer Zuordnungstabelle (24) umfasst, in der jedem aus einer Lenkwellenposition und einer Hilfselementposition bestehenden Wertepaar eine entsprechende Umdrehung der Lenkwelle (12) zugeordnet ist.

## Claims

1. Device for determining the steering angle of a vehicle steering system having a steering shaft (12); with an apparatus (14) for determining the steering shaft position within a 360° revolution; with an apparatus (20), which is used for determining the current revolution of the steering shaft (12), whereby the apparatus (20) comprises a movable auxiliary element (26) and a detecting apparatus (20) determining the position of the auxiliary element; with an evaluating apparatus (18); and with a linking apparatus (56), by means of which the auxiliary element (26) is constantly kinematically linked to the steering shaft (12), **characterised in that** the detecting apparatus (20) comprises: a plurality of sensors (S1-S7) distributed over the periphery of the auxiliary element (26) and, linked to the auxiliary element (26), a signalling element (54), which extends over an angular sector corresponding approximately to a value of somewhat less than 1.5 x 360°/number of sensors (S1-S7).

2. Device according to claim 1, **characterised in that** the evaluating apparatus (18) determines the revolution in which the steering shaft (12) is currently situated from a pair of values comprising the angular position of the steering shaft (12) and the position of the auxiliary element (26).

3. Device according to claim 2, **characterised in that** the linking apparatus (56) transmits the movement of the steering shaft (12) to the auxiliary element (26) in such a manner that each value pair comprising the angular position of the steering shaft (12) and the position of the auxiliary element (26) occurs only once over the maximum possible number of revolutions.

4. Device according to one of the preceding claims, **characterised in that** the auxiliary element (26) is arranged coaxially with the steering shaft.

5. Device according to one of the preceding claims, **characterised in that** the auxiliary element (26) comprises a deflecting cage (26) arranged radially externally round the steering shaft (12) and the linking apparatus comprises a flexible linking element (56).

6. Device according to one of the preceding claims, **characterised in that** the linking element comprises at least one electrical line, in particular a coiled band (56) which electrically links an apparatus fixed to the steering shaft to the static region of the vehicle.

7. Device according to one of the claims 1 to 4, **characterised in that** the linking apparatus comprises a gearbox with at least one gearwheel.

8. Device according to one of the preceding claims, **characterised in that** the number of sensors (S1-S7) is at least equal to the number of possible revolutions of the steering shaft (12).

9. Device according to one of the preceding claims, **characterised in that** the detecting apparatus (S1-S7) functions without contact.

10. Device according to one of the preceding claims, **characterised in that** the maximum number of revolutions of the steering shaft (12) is 7, the gearing ratio of the rotation movement of the steering shaft (12) to the auxiliary element (26) is 4/7 and the number of sensors (S1-S7) is 7, and the angular range of the signalling element (54) is approximately 75°.

11. Device according to one of the claims 7 to 10, **characterised in that** the detecting apparatus comprises optical or magnetic sensors, in particular Hall effect ICs (S1-S7), and the signalling device has a coloured code or a magnetic segment (54).

12. Device according to one of the preceding claims, **characterised in that** it comprises a memory (22) with a reference table (24) in which to each value pair comprising a steering shaft position and an auxiliary element position a corresponding revolution of the steering shaft (12) is assigned.

## Revendications

1. Dispositif pour la détermination de l'angle de braquage d'une direction de véhicule avec un arbre de direction (12) ; comprenant un appareil (14) pour la détermination de la position d'arbre de direction à l'intérieur d'une rotation de 360° ; un appareil (20), qui est utilisé lors de la détermination de la rotation actuelle de l'arbre de direction (12), l'appareil (20) comprenant un élément auxiliaire (26) mobile et un dispositif de détection (20) constatant la position de l'élément auxiliaire ; un appareil d'analyse (18) ; et un appareil de liaison (56), par lequel l'élément auxiliaire (26) est relié au plan cinématique constamment avec l'arbre de direction (12), **caractérisé en ce que** le dispositif de détection (20) comprend : une pluralité de capteurs (S1 - S7) disposés et répartis sur la périphérie de l'élément auxiliaire (26), et un générateur de signal (54) relié à l'élément auxiliaire (26), qui s'étend sur un secteur d'angle qui correspond à peu près à une valeur d'environ d'un peu moins de 1,5 * 360°/nombre des détecteurs (S1 - S7).

2. Dispositif selon la revendication 1, **caractérisé en ce que** l'appareil d'analyse (18) détermine la rotation dans laquelle se trouve précisément l'arbre de direction (12) à partir d'une paire de valeurs qui comprend la position angulaire de l'arbre de direction (2) et la position de l'élément auxiliaire (26).

3. Dispositif selon la revendication 2, **caractérisé en ce que** l'appareil de liaison (56) transmet le mouvement de l'arbre de direction (12) à l'élément auxiliaire (26) de telle sorte que chaque paire de valeurs constituée de la position d'angle de l'arbre de direction (12) et de la position de l'élément auxiliaire (26) n'apparaît qu'une fois par rapport au nombre maximum possible de rotations.

4. Dispositif selon l'une quelconque des revendications précédentes, **caractérisé en ce que** l'élément auxiliaire (26) est disposé sur le même axe que l'arbre de direction.

5. Dispositif selon l'une quelconque des revendications précédentes, **caractérisé en ce que** l'élément auxiliaire (26) comprend une cage de déviation (26) disposée radialement à l'extérieur autour de l'arbre de direction (12) et l'appareil de liaison un élément de liaison (56) flexible.

6. Dispositif selon l'une quelconque des revendications précédentes, **caractérisé en ce que** l'élément de liaison comprend au moins une ligne électrique, en particulier une bande d'enroulement (56), qui relie électriquement un appareil solidaire de l'arbre de direction au secteur de véhicule fixe.

7. Dispositif selon l'une quelconque des revendications 1 à 4, **caractérisé en ce que** l'appareil de liaison comprend une transmission avec au moins une roue de transmission.

8. Dispositif selon l'une quelconque des revendications précédentes, **caractérisé en ce que** le nombre de capteurs (S1 - S7) est au moins égal au nombre des rotations maximum possibles de l'arbre de direction (12).

9. Dispositif selon l'une quelconque des revendications précédentes, **caractérisé en ce que** le dispositif de détection (S1 - S7) travaille sans contact.

10. Dispositif selon l'une quelconque des revendications précédentes, **caractérisé en ce que** le nombre maximum des rotations de l'arbre de direction (12) est égal à 7, la réduction du mouvement de rotation de l'arbre de direction (12) sur l'élément auxiliaire (26) égale à 4/7 et le nombre des capteurs (S1 - S7) égal à 7 et l'étirement angulaire du générateur de signal (54) est d'environ 75°.

11. Dispositif selon l'une quelconque des revendications 7 à 10, **caractérisé en ce que** l'appareil de détection comprend des capteurs optiques ou magnétiques, en particulier des Hall-ICs (S1 - S7), et le générateur de signal un code de couleur ou un segment d'aimant (54).

12. Dispositif selon l'une quelconque des revendications précédentes, **caractérisé en ce qu'**il comprend une mémoire (22) avec un tableau d'attribution (24), dans laquelle une rotation appropriée de l'arbre de direction (12) est attribuée à chaque paire de valeurs constituée d'une position d'arbre de direction et d'une position d'élément auxiliaire.
